# EUROPÄISCHE PATENTSCHRIFT

(11) **EP 0 399 135 B1**
(45) Veröffentlichungstag und Bekanntmachung des Hinweises auf die Patenterteilung: **28.04.1993**
(21) Anmeldenummer: 90101642.8
(22) Anmeldetag: 27.01.1990
(51) Int. Cl.: F16F 1/32, F16F 1/36

(54) **Tellerfeder**
Belleville spring
Rondelle Belleville

(30) Priorität: 20.05.1989 DE 3916538
(43) Veröffentlichungstag der Anmeldung: 28.11.1990
(73) Patentinhaber: Firma Carl Freudenberg, 69469 Weinheim (DE)
(72) Erfinder: Buchholz, Klaus, D-6940 Weinheim (DE)

(56) Entgegenhaltungen:
- DE-A- 2 526 775
- DE-A- 2 603 995
- DE-C- 463 160
- DE-U- 1 663 338
- FR-A- 2 225 657
- US-A- 3 601 345

## Beschreibung

Die Erfindung betrifft eine Tellerfeder nach dem Oberbegriff von Anspruch 1.

Eine solche Tellerfeder ist aus der DE-A- 25 26 775 bekannt. Sie besteht aus einem Federkörper aus Epoxydharz, somit einen Hartwerkstoff, in den Armierungselemente in Form kontinuierlicher Spiralen oder zueinander konzentrisch angeordneter ringförmiger Schleifen eingebettet sind. Die damit erzielte Schwingungsdämpfung ist wenig befriedigend, was Schwingungsausschläge einer überhöhten Amplitude und die Entstehung von Anschlaggeräuschen verursachen kann. Auch ist die Isolierung akustisch wirksamer, hochfrequenter Schwingungen wenig befriedigend.

Der Erfindung liegt die Aufgabe zugrunde, eine solche Tellerfeder derart weiterzuentwickeln, daß sich bei verbesserter Dämpfung niederfrequenter Schwingungen und guter Unterdrückung von Anschlaggeräuschen eine verbesserte Isolierung der aksustisch wirksamen Schwingungen ergibt.

Diese Aufgabe wird erfindungsgemäß bei einer Tellerfeder der eingangs genannten Art mit den kennzeichnenden Merkmalen von Anspruch 1 gelöst. Auf vorteilhafte Ausgestaltungen nehmen die Unteransprüche bezug.

Bei der erfindungsgemäßen Tellerfeder besteht der hohlkegelige Federkörper aus weichem, gummielastischem Werkstoff, vorzugsweise aus Gummi. Die während der bestimmungsgemäßen Verwendung eingeleiteten, niederfrequenten Schwingungen erfahren dadurch eine gute Dämpfung. Sie können nicht mehr im bisherigen Umfange die Entstehung von Schwingungsausschlägen extremer Amplitude verursachen.

Die während der bestimmungsgemäßen Verwendung eingeleiteten, akustisch störenden, hochfrequenten Schwingungen erfahren demgegenüber eine gute Isolierung. Sie werden dementsprechend in wesentlich geringerem Maße über die erfindungsgemäße Tellerfeder übertragen als bei den bisherigen Ausführungen.

Die die hohlkegelige Armierung bildenden Teilelemente sind bei der erfindungsgemäßen Ausführung etwa in der Mitte der in der Richtung der Längsachse gemessenen Dicke des Federkörpers angeordnet und haben ein im wesentlichen kreisförmig begrenztes Profil im Achsschnitt. Der Federkörper ist hierbei zusätzlich in den das Profil der Teilelemente in Richtung der Längsachse vorgelagerten Teilbereichen zumindest teilweise weggelassen. Der den Federkörper bildende, gummielastische Werkstoff vermag dadurch bei einer Anschlagberührung in die Teilbereiche auszuweichen, was ein weiches Auffangen der durch die Anschlagberührung verursachten, harten Schläge bedingt und der Entstehung von Anschlaggeräuschen vorbeugt. Zusätzlich ergibt sich während der Anschlagberührung eine gute Isolierung akustisch störender Schwingungen, und es wird einer Überlastung des den Federkörper bildenden, gummielastischen Werkstoffes in den dem Profil der Teilelemente in Richtung der Längsachse vorgelagerten Teilbereichen vorgebeugt. Im Hinblick auf die Erzielung eines hohen Gebrauchswertes und einer besonders langen Gebrauchsdauer der erfindungsgemäßen Tellerfeder ist das von großem Vorteil.

Die Teilelemente können bei der erfindungsgemäßen Tellerfeder durch aufeinander folgende Abschnitte einer hohlkegelig geformten Schraubenfeder gebildet sein. Die Tragfähigkeit wird hierdurch deutlich gesteigert und begünstigt eine Verwendung im Bereich des Fahrzeugbaues.

Bei Ausführungen, bei denen die Teilelemente durch einander konzentrisch umschließende und einen radialen Abstand voneinander aufweisende Ringe gebildet sind, ergibt sich demgegenüber eine verbesserte Isolierung akustisch wirksamer, hochfrequenter Schwingungen. Sie gelangen vorzugsweise in Fällen zur Anwendung, in denen es maßgeblich auf eine Unterdrückung der Geräuschübertragung ankommt.

Die die Armierung bildenden Teilelemente sollen aus einem Werkstoff mit besonders großem Elastizitätsmodul erzeugt sein, beispielsweise aus Metall oder aus einem faserverstärkten Kunstharz. Das Verhältnis aus dem Durchmesser ihres Profils und der Dicke des Federkörpers in Richtung der Längsachse soll 0,4 bis 0,7 betragen, vorzugsweise 0,5 bis 0,6, um eine ausreichend feste Anbindung des den Federkörper bildenden, gummielastischen Werkstoffes zu gewährleisten und Beschädigungen des Federkörpers bei einer extremen Ein- oder Ausfederung zu verhindern.

Die in radialer Richtung aufeinander folgende Anzahl der Teilelemente ergibt sich aus der Größe der Tellerfeder. Darüber hinaus sollen die radialen Abstände der Teilelemente etwa die Größe des Durchmessers der Teilelemente haben. Die Anwendung eines von dieser Regel abweichenden Abstandes kann sich in bestimmten Anwendungen empfehlen.

Eine besonders gute Unterdrückung von Anschlaggeräuschen wird erhalten, wenn das Verhältnis aus der summierten Umfangserstreckung der Teilbereiche eines jeden Teilelementes und der zugehörigen Umfangserstreckung der Teilbereiche 40 bis 60 % beträgt. Das Verhältnis aus der Umfangserstreckung der Teilbereiche und dem Durchmessers des Profils der Teilelemente soll dabei 4 bis 7 betragen, zweckmäßigerweise 5 bis 6. Weitere Verbesserungen hinsichtlich der Geräuschisolierung werden erhalten, wenn die Teilbereiche von in radialer Richtung benachbarten Teilelementen einander auf Lücke zugeordnet sind.

Der Gegenstand der Erfindung wird nachfolgend anhand der in der Anlage beigefügten Zeichnungen weiter erläutert. Es zeigen:
Figuren 1 und 2
   Eine erste Ausführung der erfindungsgemäßen Tellerfeder in einer quergeschnittenen Darstellung und in der Draufsicht.
Figuren 3 und 4:
   Eine zweite Ausführung der erfindungsgemäßen Tellerfeder in einer quergeschnittenen Darstellung und der Draufsicht.

Die dargestellten Tellerfedern umfassen in allen Fällen einen ihre Längsachse 3 konzentrisch umschließenden, hohlkegelige Federkörper aus gummielastischem Werkstoff, der in Richtung der Längsachse 3 die Dicke F hat. In den Federkörper ist eine hohlkegelige Armierung 2 eingebettet, welche aus Teilelementen 2.1 - 2.n besteht, welche einen radialen Abstand voneinander haben. Die Teilelemente haben ein kreisförmig begrenztes Profil im Achsschnitt und den Durchmesser D. Sie sind in Richtung der Längsachse 3 mittig in das Profil des Federkörpers 1 eingebettet.

Der Federkörper 1 ist in den das Profil der Teilelemente 2.1 bis 2.n in Richtung der Längsachse 3 vorgelagerten Teilbereichen 4 zumindest teilweise weggelassen. Die Teilbereiche 4 sind segmentartig ausgebildet und im wesentlichen gleichmäßig in Umfangsrichtung verteilt. Darüber hinaus sind in radialer Richtung aufeinander folgende Teilbereiche benachbarter Teilelemente einander auf Lücke zugeordnet.

Die Teilelemente 2.1 - 2.n haben bei der gezeigten Ausführungsbeispielen eine Dicke D von 10 mm. Die zugehörige, in Richtung der Längsachse 3 gemessene Dicke F des Federkörpers beträgt 20 mm, die Umfangserstreckung der Teilbereiche 4 von innen nach außen zunehmend 35 bis 60 mm.

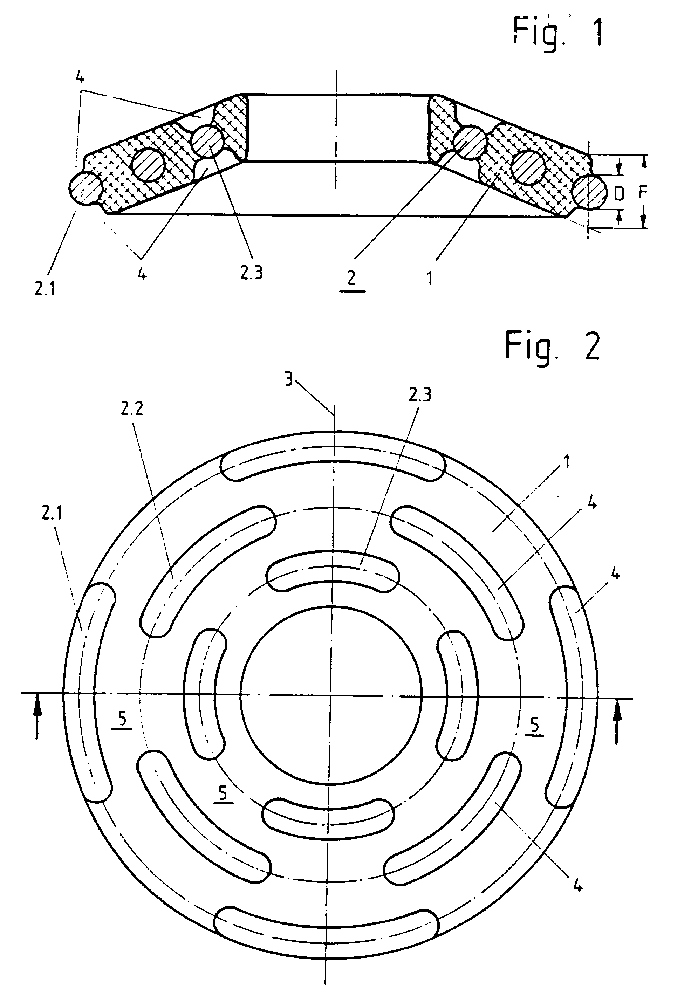

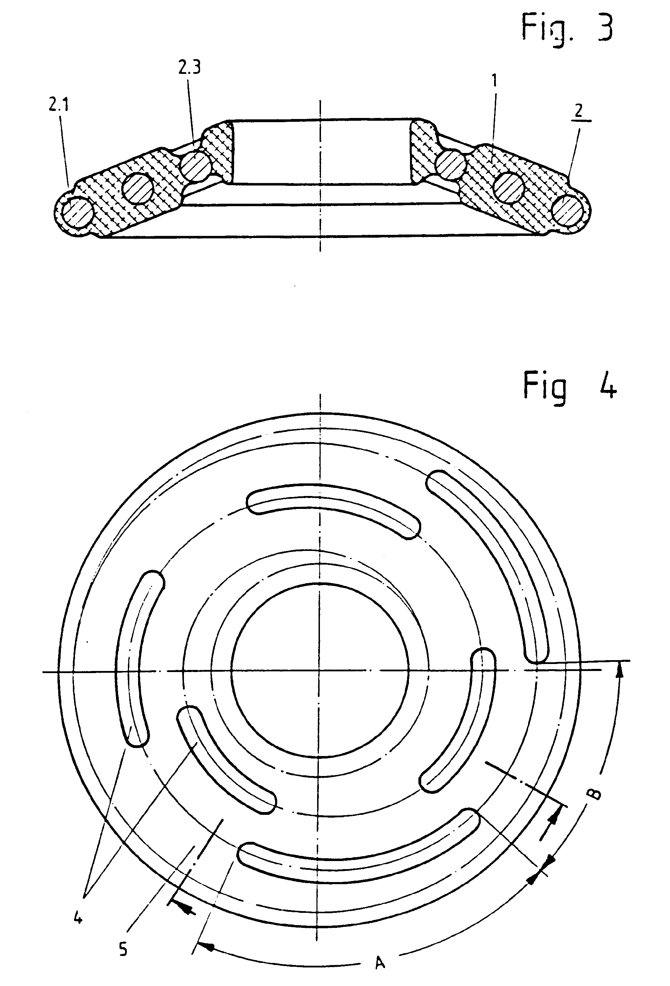

Die Teilelemente 2.1 bis 2.n bestehen bei der in Figur 1 gezeigten Tellerfeder aus metallischen Ringen von kreisförmig begrenztem Profil, welche einander konzentrisch umschließen und unabhängig voneinander in den Federkörper eingebettet sind. Sie sind haftend mit dem den Federkörper 1 bildenden Werkstoff verbunden.

Der Federkörper 1 ist in den mit 4 bezeichneten Teilbereichen völlig weggelassen. Die in den den Teilbereichen 4 benachbarten Zwischenzonen 5 vermögen dadurch bei einer Anschlagberührung der Tellerfedern in ausgezeichneter Weise in seitlicher Richtung auszuweichen. Hierdurch wird eine ausgezeichnete Unterdrückung von Anschlaggeräuschen erreicht und die Entstehung von Schlagbelastungen in dem Federkörper und mit diesem in Berührung gelangenden, angrenzenden Maschinenteilen vermieden. Im Hinblick auf die Erzielung einer guten Dauerhaltbarkeit ist das von Vorteil.

Bei der Ausführung nach den Figuren 3 und 4 besteht die Armierung 2 aus einer hohlkegelig gewundenen Schraubenfeder. Die Teilelemente 2.1 bis 2.n werden hierbei durch die in radialer Richtung aufeinander folgenden Federwindungen gebildet. Sie sind im Bereich des Innen- und des Außenumfanges zu in sich geschlossenen Ringen verbunden, wodurch eine sichere Festlegung an den anzuschließenden, relativ beweglichen Maschinenteilen problemlos ist. Die Teilelemente sind abweichend von der Ausführung nach Figur 1 allseitig in den gummielastischen Werkstoff des Federkörpers eingebettet und hierdurch nicht der Einwirkung von Umgebungseinflüssen ausgesetzt. Der Federkörper besteht in den das Profil der Teilelemente in Richtung der Längsachse vorgelagerten Teilbereichen indessen nur aus einer folienartig dünn ausgebildeten Beschichtung, wodurch die die Teilbereiche umgebenden Zwischenzonen bei einer Anschlagberührung auch bei dieser Ausführung in ausreichendem Maße in seitlicher Richtung auszuweichen vermögen. Die Teilbereiche sind im übrigen entsprechend den vorliegenden Darlegungen dimensioniert und einander zugeordnet. Sie haben in Umfangsrichtung eine Erstreckung A, die mit derjenigen B der in Umfangsrichtung beiderseits anschließenden Zwischenzonen im wesentlichen übereinstimmt.

## Patentansprüche

1. Tellerfeder, umfassend einen ihre Längsachse (3) umschließenden, hohlkegeligen Federkörper (1) der Dicke (F), der aus elastisch verformbarem, polymeren Werkstoff besteht, sowie eine in den Federkörper (1) eingebettete, hohlkegelige Armierung (2), die aus in radialer Richtung aufeinander folgenden Teilelementen (2.1...2.n) besteht, welche in Richtung der Längsachse (3) eine Dicke (D) haben, die kleiner ist als die Dicke (F) des Federkörpers (1), dadurch gekennzeichnet, daß der Federkörper (1) aus gummielastischem Werkstoff besteht, daß die Teilelemente (2.1 bis 2.n) in der Mitte der in Richtung der Längsachse (3) gemessenen Dicke (F) des Federkörpers (1) angeordnet sind und ein im wesentlichen kreisförmig begrenztes Profil im Achsschnitt haben und daß der Federkörper (1) in den dem Profil der Teilelemente (2.1 bis 2.n) in Richtung der Längsachse (3) vorgelagerten Teilbereichen (4) zumindest teilweise weggelassen ist.

2. Tellerfeder nach Anspruch 1, dadurch gekennzeichnet, daß die Teilelemente (2.1 bis 2.n) aufeinander folgende Abschnitte einer kontinuierlich durchgehend ausgebildeten, hohlkegeligen Schraubenfeder bilden.

3. Tellerfeder nach Anspruch 1, dadurch gekennzeichnet, daß die Teilelemente (2.1 bis 2.n) durch voneinander unabhängig eingebettete, konzentrische Ringe gebildet sind.

4. Tellerfeder nach Anspruch 1 bis 3, dadurch gekennzeichnet, daß die Teilbereiche (4) segmentartig ausgebildet und im wesentlichen gleichmäßig in Umfangsrichtung verteilt sind.

5. Tellerfeder nach Anspruch 4, dadurch gekennzeichnet, daß die summierte Umfangserstreckung der Teilbereiche (4) etwa 40 bis 60 % der insgesamt verfügbaren Umfangserstreckung der Teilelemente (2.1 bis 2.n) umfaßt.

6. Tellerfeder nach Anspruch 4 bis 5, dadurch gekennzeichnet, daß das Verhältnis aus der Umfangserstreckung (A) der Teilbereiche (4) und derjenigen (B) der diese in Umfangsrichtung voneinander trennenden Zwischenzonen (5) 0,6 bis 1,2 beträgt.

7. Tellerfeder nach Anspruch 4 bis 6, dadurch gekennzeichnet, daß die in radialer Richtung benachbarten Teilbereiche (4) einander auf Lücke zugeordnet sind.

## Claims

1. A Belleville spring comprising a hollow conical spring body (1) of thickness (F), which surrounds its longitudinal axis (3) and is composed of elastically deformable, polymer material, and a hollow conical reinforcement (2) which is embedded in the spring body (1) and is composed of partial elements (2.1...2.n) which are successive in the radial direction and have a thickness (D) in the direction of the longitudinal axis (3) which is less than the thickness (F) of the spring body (1), characterised in that the spring body (1) is composed of rubber-elastic material, in that the partial elements (2.1 to 2.n) are arranged in the centre of the thickness (F) of the spring body (1), measured in the direction of the longitudinal axis (3), and have a profile in the axial section which is bounded in a substantially circular manner, and in that the spring body (1) is at least partially omitted in the partial regions (4) disposed ahead of the profile of the partial elements (2.1 to 2.n) in the direction of the longitudinal axis (3).

2. A Belleville spring according to claim 1, characterised in that the partial elements (2.1 to 2.n) form successive portions of a continuous, hollow conical, helical spring.

3. A Belleville spring according to claim 1, characterised in that the partial elements (2.1 to 2.n) are formed by concentric rings which are embedded independently of one another.

4. A Belleville spring according to any of claims 1 to 3, characterised in that the partial regions (4) are of segment-type construction and are distributed substantially evenly in the circumferential direction.

5. A Belleville spring according to claim 4, characterised in that the summated circumferential extent of the partial regions (4) comprises approximately 40 to 60% of the overall available circumferential extent of the partial elements (2.1 to 2.n).

6. A Belleville spring according to claim 4 or 5, characterised in that the ratio of the circumferential extent (A) of the partial regions (4) and that (B) of the intermediate zones (5), separating said partial regions from one another in the circumferential direction, is 0.6 to 1.2.

7. A Belleville spring according to any of claims 4 to 6, characterised in that the radially adjacent partial regions (4) are offset in relation to one another.

## Revendications

1. Rondelle Belleville, comportant un corps de rondelle (1) d'épaisseur F, en forme de cône creux, entourant son axe longitudinal (3) et qui se compose d'un matériau polymère élastiquement déformable, ainsi qu'un renforcement (2), en forme de cône creux, noyé dans le corps de rondelle (1) et qui se compose d'éléments partiels (2.1...2.n) se suivant mutuellement dans une direction radiale et qui ont, dans la direction de l'axe longitudinal (3), une épaisseur D qui est plus petite que l'épaisseur F du corps de rondelle (1), caractérisée en ce que le corps de rondelle (1) se compose d'un matériau ayant l'élasticité du caoutchouc, en ce que les éléments partiels de renforcement (2.1 à 2.n) sont disposés au milieu de l'épaisseur F, mesurée dans la direction de l'axe longitudinal (3), du corps de rondelle (1) et ont en coupe axiale un profil délimité dans l'essentiel par une forme circulaire et en ce que le corps de rondelle (1) est évidé, au moins en partie, dans les zones partielles (4) situées en avant du profil des éléments partiels de renforcement (2.1 à 2.n) dans la direction de l'axe longitudinal (3).

2. Rondelle Belleville selon la revendication 1, caractérisée en ce que les éléments partiels de renforcement (2.1 à 2.n) constituent des parties, se suivant mutuellement, d'un ressort hélicoïdal en forme de cône creux qui est agencé avec une structure continue.

3. Rondelle Belleville selon la revendication 1, caractérisée en ce que les éléments partiels de renforcement (2.1 à 2.n) sont constitués par des anneaux concentriques, noyés indépendamment les autres.

4. Rondelle Belleville selon une des revendications 1 à 3, caractérisée en ce que les zones partielles (4) sont agencées en forme de segments et sont réparties dans l'essentiel uniformément dans une direction circonférentielle.

5. Rondelle Belleville selon la revendication 4, caractérisée en ce que la somme des dimensions circonférentielles des zones partielles (4) s'élève entre 40 à 60 % de la dimension circonférentielle, disponible au total, des éléments partiels de renforcement (2.1 à 2.n).

6. Rondelle Belleville selon une des revendications 4 et 5, caractérisée en ce que le rapport entre la dimension circonférentielle A des zones partielles (4) et celle B des zones intermédiaires (5) les séparant l'une de l'autre dans une direction circonférentielle est compris entre 0,6 et 1,2.

7. Rondelle Belleville selon une des revendications 4 à 6, caractérisée en ce que les zones partielles (4), adjacentes dans une direction radiale, sont associées mutuellement de façon quinconcée.
